# EUROPEAN PATENT SPECIFICATION

(11) **EP 2 899 395 B1**
(45) Date of publication and mention of the grant of the patent: **12.04.2017**
(21) Application number: 14382019.9
(22) Date of filing: 23.01.2014
(51) Int. Cl.: F03D 1/06

(54) **Wind turbine blades**
Windturbinenschaufeln
Pales de turbine d'éolienne

(43) Date of publication of application: 29.07.2015
(73) Proprietor: Alstom Renovables España, S.L., 08005 Barcelona (ES)
(72) Inventor: Betran Palomas, Jaume, 08172 Sant Cugat Del Vallès (ES)
(74) Representative: ZBM Patents - Zea, Barlocci & Markvardsen

(56) References cited:
- WO-A1-2004/088130
- US-A1- 2009 269 198
- US-B1- 6 276 641

## Description

The present disclosure relates to wind turbine blades comprising a deformable trailing edge (DTE) section and wind turbines comprising such blades.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The gearbox (if present), the generator and other systems are usually mounted in a nacelle on top of a wind turbine tower.

Pitch systems are normally employed for adapting the position of the blades to varying wind conditions. In this respect, it is known to rotate the position of each of the blades along its longitudinal axis in such a way that lift and drag are changed to reduce torque. This way, even though the wind speed increases, the torque transmitted by the rotor to the generator remains substantially the same. Using pitch systems may be particularly suitable for adapting the wind turbine blade to a varying wind speed. However, the control of the pitch systems may be rather slow and may not be suitable to react to a sudden wind gust or any other high rate changing wind conditions.

In that sense, it is known to change the aerodynamics of a wind turbine blade by providing the blade with a trailing edge flap hinged to a main body. Deflecting the aerodynamic surface about a hinged point may lead to flow separation which may cause abrupt aerodynamic changes thus decreasing load alleviation and reducing efficiency of the wind turbine.

It is also known to continuously vary the aerofoil geometry in order to control aerodynamic forces substantially instantaneously. WO2004/088130 describes systems that control aerodynamic forces substantially instantaneously by continuous variation of the aerofoil geometry in the leading edge region and the trailing edge region along part of or the whole blade span. It further describes the use of smart materials or mechanical actuators integrated in a deformable material changing the outer geometry in the leading and trailing edge region and thereby changing the blade section aerodynamic forces.

These systems need to overcome the inherent structural resistance of the blade in order to be able to deform. This may involve overcoming the blade profile's bending stiffness. Since the blades are normally designed to withstand substantially high loads, overcoming these loads may require a lot of energy.

It is an object of the present disclosure to provide wind turbine blades allowing variation of aerofoil geometry that at least partially reduces one or more of the aforementioned drawbacks.

### SUMMARY

In a first aspect a wind turbine blade is provided. The blade comprises a deformable trailing edge (DTE) section extending chordwise and spanwise. The DTE section is split in a suction side subsection and a pressure side subsection by one or more slits. Furthermore, the DTE section comprises one or more actuators acting on at least one of the suction side and pressure side subsections, wherein the suction side and pressure side subsections and the actuators are arranged such that deformation of one of the subsections is associated with a substantially corresponding deformation of the other subsection.

According to this aspect, the DTE section is split into two subsections (suction side and pressure side subsections) by one or more slits. The presence of one or more slits dividing the DTE section provides the DTE section with at least one additional degree of freedom, namely a sliding movement of the subsections with respect to each other or with respect to an intermediate structure arranged between them. Or put in other words, the division of the DTE section into two subsections by one or more slits provides a "more deformable" DTE section and reduces tension and/or compression loads (depending on the subsection) in the DTE section when it is being deformed. The bending stiffness of the DTE section may be reduced and likewise its bending behaviour may be improved. This way, the energy consumption required for overcoming the lower bending stiffness is also reduced. At the same time, a DTE section with a largely variable shape may be maintained. Furthermore, as an aerodynamic surface of the blade is modified, it can be used e.g. to mitigate the loads acting on the blades. Furthermore this may be achieved without excessively complicating a wind turbine blade structure.

Throughout the description and claims, the term "deformable trailing edge (DTE)" is used for the portion of the blade (viewed in a chordwise direction) that spans approximately from a "structural portion" of the blade to the trailing edge.

In this sense, "structural portion" is to be understood as a portion or component of the wind turbine blade that has, as a main function, withstanding and transmitting loads. Such a structural portion may be relatively strong/stiff compared to other parts of the blade. The structural portion of the blade may typically include a spar such as for example, an I-beam spar, a spar box or a C-shape spar. A spar is typically provided in wind turbine blades to maintain the blade's shape and it supports and transmits loads on the blades, in particular the blade's bending loads.

In some examples, the subsections and the actuators are arranged such that deformation of one of the subsections brings about a substantially corresponding deformation of the other subsection. In some cases, the subsections may be directly or indirectly attracted to each other, for example using connectors or by pre-compressing each subsection. Therefore, actuating on any of the subsections causes deformation in the other subsection in order to substantially maintain a blade's closed form. In other cases, the actuators may be activated to deform both subsections in a coordinated manner in order to substantially maintain the closed form of the blade.

In some examples, the blade may further comprise one or more connectors directly or indirectly linking the suction side subsection and pressure side subsections. Providing one or more connectors may ensure that the two subsections are not separated, i.e. that the blade stays "closed". In these cases, rigid or elastic connectors may be foreseen.

In another aspect, a wind turbine is provided comprising one or more blades substantially as hereinbefore described.

### BRIEF DESCRIPTION OF THE DRAWINGS

Non-limiting examples of the present disclosure will be described in the following with reference to the appended drawings, in which:

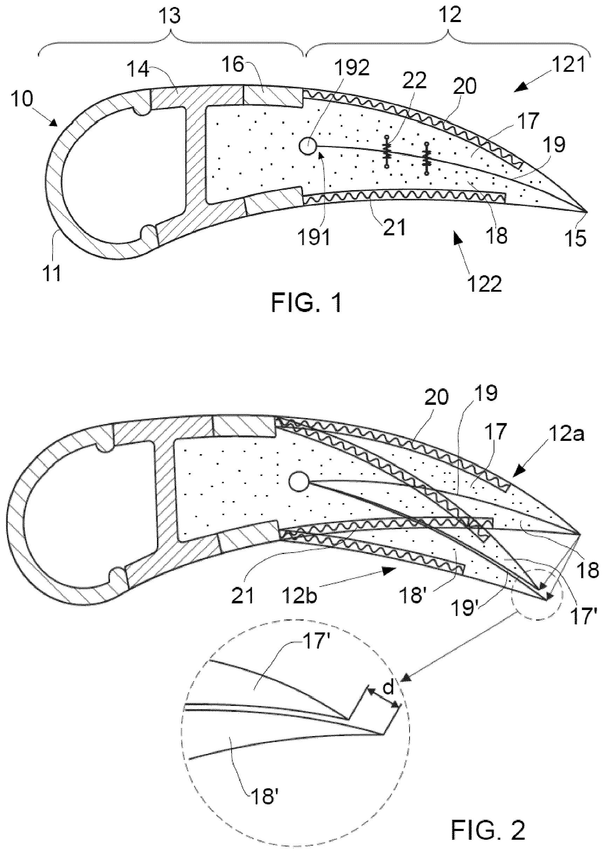

Figures 1 - 6 show cross-sectional views of examples of a wind turbine blade according to different examples.

### DETAILED DESCRIPTION OF EXAMPLES

Figure 1 shows a cross-sectional view of a wind turbine blade 10 having a skin 11. The blade may comprise a deformable trailing edge (DTE) section 12, in particular a Continuously Deformable Trailing Edge (CDTE) section, extending chordwise, and a substantially non-deformable portion 13. The DTE section 12 may extend from the blade spar to the blade's trailing edge 15.

The spar may be in the form of an I-beam spar 14 and may be arranged inside the substantially non-deformable portion 13 of the blade in order to maintain the distance between an inner surface of a blade suction side 121 and an inner surface of a blade pressure side 122. The I-beam spar 14 may support wind loads acting on the blades, and in particular, the bending loads acting on the blade.

A rigid structure 16 extending rearward from the spar may further be provided forming part of the substantially non-deformable portion 13 of the blade. Such a rigid structure 16 may support, at least in part, the loads derived from the DTE section 12 and may have e.g. an upper part and a lower part that support a portion of the blade's skin 11. In another example, the rigid structure 16 may be formed by load-bearing skin.

In alternative examples, the I-beam spar may be replaced by a spar box or a C-shaped spar. The rigid structure may also have other shapes such as, for example, a substantially C-shaped cross-section.

As shown in figure 1, the DTE section 12 may be split into two subsections, a suction side subsection 17 and a pressure side subsection 18 by, for example, a slit 19. The slit 19 may be arranged substantially coincident with part of the blade's chordline. The slit 19 may further end at a blade's trailing edge 15.

In the example of figure 1, the provision of the slit 19 between the suction side 17 and pressure side 18 subsections involves that the two subsections can slide with respect to each other so that an aerodynamic shape of the DTE section, and thereby a camber of a blade cross-section, is changeable. In alternative examples, the slit or slits may adopt other forms as long as the suction side and the pressure side subsections can slide with respect to each other or with respect to an intermediate structure arranged there-between. The sliding ensures that deformation of the DTE section may be more easily achieved, using less energy.

In the example shown in figure 1, a slit inner end 191 may terminate in an opening or cavity 192 that allows higher deformation capabilities and may help to avoid, or at least reduce, stress concentrations. In this particular example, the cavity has a substantially round, cylindrical shape, but other geometries may also be foreseen.

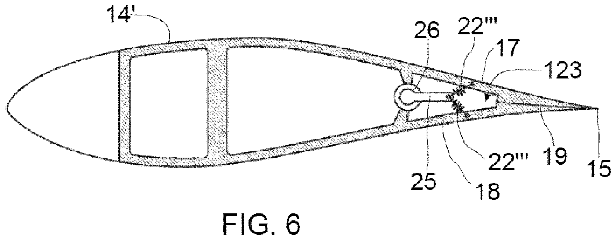

Furthermore, in the example of figure 1, each subsection may comprise a piezoelectric actuator 20 and 21. In alternative examples, other types of actuators may also be foreseen. Alternative examples of actuators may be a motor with e.g. a cam, and/or a lever (see figure 6), and/or a crank, and pneumatic or hydraulic cylinders.

As further shown in figure 1, the actuators 20, 21 may be mounted close to an inner surface of a suction side and close to an inner surface of a pressure side subsection's skin respectively. In some of these cases, the actuators may be mounted directly to the inner surface of the suction side and pressure side subsections' skin. In alternative examples a different number of actuators may be provided. Even in some cases, a single actuator may be foreseen. In all cases, by activating one or more actuators an aerodynamic shape of the DTE section is changed.

In the example of figure 1, the DTE section 12 may further comprise two elastic or flexible connectors 22. Each connector 22 may link one of the suction side and pressure side subsections 17, 18 with the other subsection 17, 18 at the other end. The connectors may be springs or e.g. elastomeric elements.

In further examples, a different number of connectors may be provided and even a single connector may be foreseen. In some cases, rigid connectors may be used. In these cases, a slotted hole may be provided to allow certain freedom. In yet further examples, instead of using connectors, the suction side and pressure side subsections may be pre-shaped such that the subsections are pushed towards each other when there is no deformation, i.e. the pressure side subsection is being pushed downwards by the suction side and the suction side is being pushed upwards by the pressure side. The subsections will thus tend to follow each other's deformation when either one of the subsections is deformed.

The example shown in figure 2 differs from that of figure 1 in that no connectors are provided. In the example of figure 2 the suction side subsection 17 and the pressure side subsection 18 may be formed by a slit 19. Each of the subsections may comprise a piezo-electric actuator. The actuation of these actuators may be coordinated such that a deformation of one of the subsections is combined with a substantially corresponding deformation of the other subsection.

In figure 2, two states of the DTE section 12 are shown: an initial shape 12a where the DTE section is non-deformed and suction side and pressure side may be divided by a slit 19 and may be in contact as no deformation has yet occurred. Furthermore, figure 2 also illustrates a deformed shape 12b wherein, for example, the pressure side subsection 18' may be deformed downwards by activating actuator 21. If actuator 20 were not activated, the two subsections may separate from each other and the slit could become a large gap between the two subsections.

This may occur in occasions if there are no connection means between the two subsections and the deformation brought about by the actuators is not coordinated.

Alternatively, if connection means between the two subsections are provided, or if the deformation induced by the actuators is coordinated, the slit will not open and only a surface indentation d (see enlarged detail of figure 2) may appear as a result from the desired sliding between the two subsections (or the sliding of each subsection with respect to an intermediate structure). The enlarged view of the detail encircled by a dashed line in figure 2 shows how the slit 19' remains substantially closed in the deformed state when the actuators are operated in a coordinate manner. The slit 19' of figure 2 is shown as slightly opened only for illustration purposes: to show the surface indentation d.

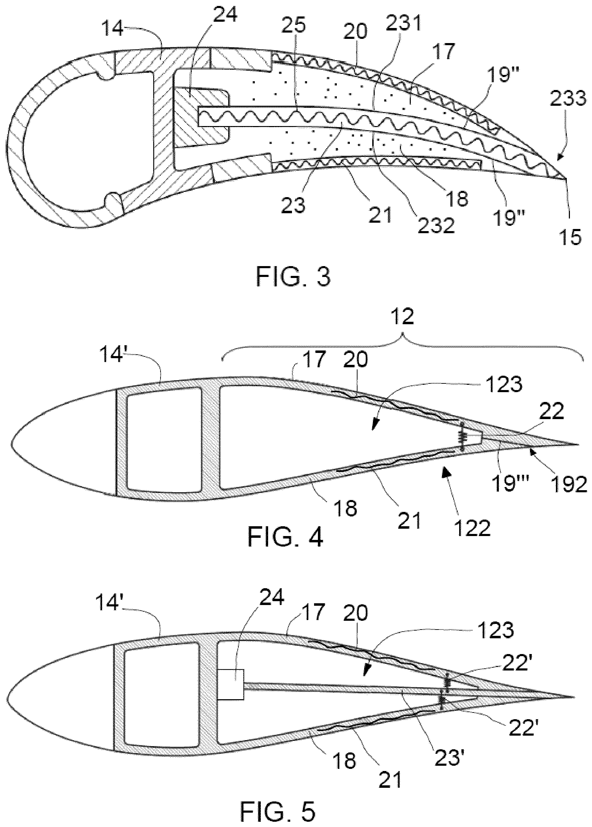

Figure 3 shows a cross-sectional view of a blade according to another example.

The example shown in figure 3 differs from that of figures 1 and 2 in that the DTE section 12 may comprise two slits 19" and an intermediate deformable beam 23 that may be arranged between the two slits 19". The beam 23 may be mounted on a substantially rigid support 24 that may emerge from the I-spar 14 towards the trailing edge 15.

As further shown in figure 3, the beam 23 may further comprise a piezoelectric actuator 25 embedded therein. In this case, the suction side subsection 17 can slide with respect to a side of the beam 231 facing the suction side subsection 17 and the pressure side subsection 18 can slide with respect to a side of the beam 232 facing the pressure side subsection 18.

In this example, each subsection 17, 18 may also comprise a piezoelectric actuator 20 and 21 thus, and as explained in connection with figures 1 and 2, connectors may be provided connecting, for example, each subsection 17, 18 to the beam 23 or connecting together the two subsections 17, 18. In alternative examples, only one actuator from the depicted actuators 20 and 21 may be provided and respective connectors. In other alternatives, instead of a piezoelectric actuator, the beam may comprise other types of actuators having a lineal behaviour. In yet further examples, the actuation of the actuators of the suction side and the actuator(s) of the pressure side could be coordinated to achieve the same effect.

As further shown in figure 3, the beam 23 may extend to the trailing edge. An outer end 233 of beam may actually form the trailing edge. This guarantees the sharpness of the trailing edge since no sliding of one section with respect to another occurs at the trailing edge.

In some implementations of the examples of figures 1 - 3, an inside portion of the subsections may be filled with an anisotropic material such as e.g. a honeycomb structure.

A honeycomb structure is a relatively lightweight material that, if designed properly, can display a desirable anisotropic behaviour, i.e. it may be made to be relatively stiff in a direction substantially perpendicular to e.g. the chord line direction, i.e. it is stiff so as to maintain the aerofoil thickness and not deform under aerodynamic pressure. At the same time, it may be made to be more flexible e.g. in a direction substantially parallel to the chord line. In other implementations, instead of a honeycomb structure material, other kinds of lightweight materials having similar anisotropic properties could be used.

Figures 4 - 6 show cross-sectional views of a wind turbine blade 10 according to further examples. In these examples, the spar may be a spar box 14'. A further difference with the examples shown in figures 1 - 3 is that an inside portion 123 of the DTE section 12 may be, at least partly, hollow.

The example of figure 4 is in other ways quite similar to the example of figure 1. However, the example shown in figure 4 further differs from that of figure 1 in that the slit 19"' ends at a pressure side 122 of the blade section. This ensures a smoother transition derived from the change in the aerodynamic shape because, in general, the pressure side is less sensible to changes than the suction side. Furthermore, having the slit outer end 192 displaced from the trailing edge contributes to maintaining the sharpness of the trailing edge.

The example shown in figure 4 may further comprise a single flexible connector 22 linking the suction side subsection 17 with the pressure side subsection 18. Each subsection 17, 18 may be provided with a piezoelectric actuator 20, 21 in a similar manner as explained in connection with figure 1.

The example shown in figure 5 is generally similar to the example illustrated in figure 3. However, the example of figure 5 differs from that shown in figure 3 in that the beam 23' is a deformable beam and two flexible connectors 22' are provided. Each connector 22' may link one of the subsections 17, 18 with the beam 23' (i.e. an intermediate structure). In further examples, as explained in connection with figure 3, the beam may comprise a piezoelectric actuator or any other actuator providing a lineal displacement.

A further difference with the example of figure 3 is that an inside portion 123 of the DTE section may, at least in part, be hollow.

The example shown in figure 6 differs from that of figure 1 in that the piezoelectric actuators may be replaced by a lever 25 being activated by a motor 26. In this case, flexible connectors 22'" may be provided linking each subsection 17, 18 with the lever 25. The slit 19 may end at the trailing edge 15 as shown or it may end at a pressure side as explained in connection with figure 4.

Clearly, many other combinations are also available. One of the principles disclosed herein upon which many more examples may be based is that of having the DTE section divided into two subsections by one or more slits, wherein the two subsections are arranged in combination with one or more actuators such that upon activation of one or more of the actuators a structural shape of the DTE section changes by coordinately deforming both subsections. In order to achieve this, the deformation of one subsection is associated with a corresponding deformation of the other subsection. This association may be done, depending on circumstances, by combining the actuators with connectors and/or with a deformable intermediate structure and/or with pre-compression of each DTE subsection.

Examples of these systems may lead to a reduction in energy consumption as the bending loads the DTE divided into two subsections that needs to overcome are lower than that of a DTE section being a single part.

Although the actuators described herein are mainly piezoelectric elements, it should be understood that other type of actuators having a substantially instantaneously lineal behaviour such as bistable elements or mechanical actuators such as pneumatic or hydraulic cylinders may also be foreseen.

In all examples, the DTE section may extend in a spanwise direction the total length of the blade or it may extend at least one section of an outer part of the blade, in particular the portion closest to the tip of the blade, e.g. for example the outer third of the blade. In further cases, a plurality of DTE sections may also be foreseen.

In all examples, the blade skin 11 of almost the whole DTE section 12 may be made of a flexible material with the exception of those areas on which structural elements rest.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A wind turbine blade (10) comprising a deformable trailing edge (DTE) section (12) extending chordwise and spanwise, wherein
the DTE section (12) is split in a suction side subsection (17) and a pressure side subsection (18) by one or more slits (19; 19'; 19"; 19"'), wherein
the DTE section (12) comprises one or more actuators (20, 21; 25) acting on at least one of the suction side (17) and pressure side (18) subsections, and wherein
the slits (19; 19'; 19"; 19"') are configured to allow a sliding movement of the subsections (17, 18) on each other or on an intermediate structure (23) arranged between the subsections (17, 18), and the suction side (17) and pressure side (18) subsections and the actuators (20, 21; 25) are arranged such that deformation of one of the subsections (17, 18) is associated with a substantially corresponding deformation of the other subsection (17, 18).

2. A wind turbine blade according to claim 1, further comprising one or more connectors (22; 22'; 22"') between the suction side (17) and pressure side (18) subsections.

3. A wind turbine blade according to any of claims 1-2, further comprising a deformable intermediate structure arranged between the suction side (17) and pressure side (18) subsections in a chordwise direction.

4. A wind turbine blade according to claim 3, wherein an outer end (233) of the intermediate structure forms the blade trailing edge (15).

5. A wind turbine blade according to any of claims 3-4, wherein the intermediate structure is one of the actuators.

6. A wind turbine blade according to any of claims 4-5, wherein the intermediate structure comprises a beam (23) incorporating one or more piezoelectric elements (25).

7. A wind turbine blade according to any of claims 1-2, wherein the suction side (17) and pressure side (18) subsections are formed by a single slit (19; 19) substantially coincident with a portion of a blade chordline, the slit (19; 19) ending at a blade trailing edge (15).

8. A wind turbine blade according to any of claims 1-2, wherein the suction side and pressure side subsections are formed by a single slit (19"'), the slit (19"') ending at a pressure side (122) of the blade section.

9. A wind turbine blade according to any of claims 1-8, wherein the suction side subsection (17) and/or the pressure side subsection (18) comprises one or more actuators (20, 21).

10. A wind turbine blade according to any of claims 1-9, wherein the actuators (20, 21; 25) comprise one or more of the following: piezoelectric elements, a motor with a cam and/or a lever and/or a crank, and pneumatic or hydraulic cylinders.

11. A wind turbine blade according to any of claims 1-10, wherein the DTE section (12) extends in a spanwise direction along approximately one third of the total length of an outer part of the blade.

12. A wind turbine blade according to any of claims 1-11, wherein the DTE section (12) spans in a chord wise direction from between 50% and 75% of the chord line of the blade section to the trailing edge (15).

13. A wind turbine blade according to any of claims 1-12, wherein the whole or at least portions of the DTE section skin (11) are made of a relatively flexible material.

14. A wind turbine blade according to any of claims 1-13, wherein the whole or at least portions of the DTE section skin (11) comprise active elements.

15. Wind turbine comprising one or more blades according to any of the preceding claims.

## Patentansprüche

1. Ein Windturbinenblatt (10) umfassend einen verformbaren Hinterkantenbschnitt (12), der sich in einer Sehnenrichtung und einer Spannweitenrichtung erstreckt, wobei
der verformbare Hinterkantenabschnitt (12) in einem Ansaugseitenunterabschnitt (17) und einem Druckseitenunterabschnitt (18) durch einen oder mehrere Schlitze (19; 19'; 19"; 19"') geteilt ist, wobei
der verformbare Hinterkantenabschnitt (12) einen oder mehrere Aktoren (20, 21; 25) umfasst, die auf mindestens einen von den der Ansaugseite (17) bzw. der Druckseite (18) entsprechenden Unterabschnitten wirkt, und wobei
die Schlitze (19; 19'; 19"; 19'") konfiguriert sind, um eine Gleitbewegung der Unterabschnitte (17, 18) bezüglich einander oder bezüglich einer zwischen den Unterabschnitten (17, 18) angeordneten Zwischenstruktur (23) zu ermöglichen, und die der Ansaugseite (17) bzw. der Druckseite (18) entsprechenden Unterabschnitte und die Aktoren (20, 21; 25) derart angeordnet sind, dass die Verformung von einem der Unterabschnitte (17, 18) mit einer im Wesentlichen entsprechenden Verformung des anderen Unterabschnitts (17, 18) in Zusammenhang steht.

2. Ein Windturbinenblatt nach Anspruch 1, weiterhin umfassend ein oder mehrere Verbindungselemente (22; 22'; 22'") zwischen den der Ansaugseite (17) und der Druckseite (18) entsprechenden Unterabschnitten.

3. Ein Windturbinenblatt nach einem der Ansprüche 1-2, weiterhin umfassend eine gemäß einer Sehnenrichtung zwischen den der Ansaugseite (17) und der Druckseite (18) entsprechenden Unterabschnitten angeordnete verformbare Zwischenstruktur.

4. Ein Windturbinenblatt nach Anspruch 3, wobei ein äußeres Ende (233) der Zwischenstruktur die Blatthinterkante (15) bildet.

5. Ein Windturbinenblatt nach einem der Ansprüche 3-4, wobei die Zwischenstruktur einer von den Aktoren ist.

6. Ein Windturbinenblatt nach einem der Ansprüche 4-5, wobei die Zwischenstruktur einen ein oder mehrere piezoelektrische Elemente (25) enthaltenden Balken (23) umfasst.

7. Ein Windturbinenblatt nach einem der Ansprüche 1-2, wobei die der Ansaugseite (17) und der Druckseite (18) entsprechenden Unterabschnitte durch einen einzigen Schlitz (19; 19) gebildet sind, der im Wesentlichen mit einem Teil einer Blattsehnenlinie zusammenfällt, wobei der Schlitz (19; 19) an einer Blatthinterkante (15) endet.

8. Ein Windturbinenblatt nach einem der Ansprüche 1-2, wobei die der Ansaugseite und der Druckseite entsprechenden Unterabschnitte durch einen einzigen Schlitz (19'") gebildet sind, wobei der Schlitz (19'") an einer Druckseite (122) des Blattabschnittes endet.

9. Ein Windturbinenblatt nach einem der Ansprüche 1-8, wobei der Ansaugseitenunterabschnitt (17) und/oder der Druckseitenunterabschnitt (18) einen oder mehrere (20, 21) Aktoren umfasst.

10. Ein Windturbinenblatt nach einem der Ansprüche 1-9, wobei die Aktoren (20, 21; 25) ein oder mehrere folgender Elemente umfassen: piezoelektrische Elemente, einen mit einer Kurvenscheibe und/oder einem Hebel und/oder einer Kurbel versehenen Motor, und pneumatische oder hydraulische Zylinder.

11. Ein Windturbinenblatt nach einem der Ansprüche 1-10, wobei der verformbare Hinterkantenabschnitt (12) sich gemäß einer Spannweitenrichtung entlang ungefähr eines Drittels der gesamten Länge eines äußeren Blattenteils erstreckt.

12. Ein Windturbinenblatt nach einem der Ansprüche 1-11, wobei der verformbare Hinterkantenabschnitt (12) sich gemäß einer Sehnenrichtung von zwischen 50% und 75% der Sehnenlinie des Blattabschnittes bis zur Hinterkante (15) erstreckt.

13. Ein Windturbinenblatt nach einem der Ansprüche 1-12, wobei die Gesamtheit oder mindestens Teile der Haut (11) der verformbaren Hinterkante aus einem relativ flexiblen Material bestehen.

14. Ein Windturbinenblatt nach einem der Ansprüche 1-13, wobei die Gesamtheit oder mindestens Teile der Haut (11) der verformbaren Hinterkante aktive Elemente umfassen.

15. Windturbine umfassend ein oder mehrere Blätter nach einem der vorhergehenden Ansprüche.

## Revendications

1. Une pale d_{'}éolienne (10) comprenant une section de flanc arrière déformable (12) s'étendant dans une direction de corde et dans une direction d'envergure, dans laquelle
la section de flanc arrière déformable (12) est divisée dans une sous-section côté aspiration (17) et une sous-section côté pression (18) par une ou plusieurs entailles (19 ; 19' ; 19" ; 19"'), dans laquelle
la section de flanc arrière déformable (12) comprend un ou plusieurs actionneurs (20, 21 ; 25) agissant sur au moins une des sous-sections côté aspiration (17) et côté pression (18), et dans laquelle
les entailles (19 ; 19' ; 19" ; 19"') sont configurées pour permettre un glissement des sous-sections (17, 18) l'une par rapport à l'autre ou par rapport à une structure intermédiaire (23) disposée entre les sous-sections (17, 18), et les sous-sections côté aspiration (17) et côté pression (18) et les actionneurs (20, 21; 25) sont disposés de façon que la déformation de l'une des sous-sections (17, 18) est associée avec une déformation essentiellement correspondante de l'autre sous-section (17, 18).

2. Une pale d'éolienne selon la revendication 1, comprenant en outre un ou plusieurs éléments de raccordement (22 ; 22' ; 22"') entre les sous-sections côté aspiration (17) et côté pression (18).

3. Une pale d'éolienne selon l'une quelconque des revendications 1-2, comprenant en outre une structure intermédiaire déformable disposée entre les sous-sections côté aspiration (17) et côté pression (18) dans une direction de corde.

4. Une pale d'éolienne selon la revendication 3, dans laquelle une extrémité extérieure (233) de la structure intermédiaire forme le flanc arrière (15) de la pale.

5. Une pale d'éolienne selon l'une quelconque des revendications 3-4, dans laquelle la structure intermédiaire est un des actionneurs.

6. Une pale d'éolienne selon l'une quelconque des revendications 4-5, dans laquelle la structure intermédiaire comprend une poutre (23) comportant un ou plusieurs éléments piézoélectriques (25).

7. Une pale d'éolienne selon l'une quelconque des revendications 1-2, dans laquelle les sous-sections côté aspiration (17) et côté pression (18) sont formées par une seule entaille (19 ; 19) coïncidant essentiellement avec une partie d'une ligne de corde de la pale, se terminant l'entaille (19 ; 19) dans un flanc arrière (15) de la pale.

8. Une pale d'éolienne selon l'une quelconque des revendications 1-2, dans laquelle les sous-sections côté aspiration et côté pression sont formées par une seule entaille (19"'), se terminant l'entaille (19"') dans un côté pression (122) de la section de la pale.

9. Une pale d'éolienne selon l'une quelconque des revendications 1-8, dans laquelle la sous-section côté aspiration (17) et/ou la sous-section côté pression (18) comprend un ou plusieurs actionneurs (20, 21).

10. Une pale d'éolienne selon l'une quelconque des revendications 1-9, dans laquelle les actionneurs (20, 21 ; 25) comprennent un ou plusieurs des éléments suivants : des éléments piézoélectriques, un moteur ayant une came et/ou un levier et/ou une manivelle, et des cylindres pneumatiques ou hydrauliques.

11. Une pale d'éolienne selon l'une quelconque des revendications 1-10, dans laquelle la section de flanc arrière déformable (12) s'étend dans une direction d'envergure le long d'environ un tiers de la longueur totale d'une partie extérieure de la pale.

12. Une pale d'éolienne selon l'une quelconque des revendications 1-11, dans laquelle la section de flanc arrière déformable (12) couvre dans une direction de corde d'entre 50% et 75% de la ligne de corde de la section de pale jusqu'au flanc arrière (15).

13. Une pale d'éolienne selon l'une quelconque des revendications 1-12, dans laquelle la totalité ou au moins des parties de la peau (11) de la section de flanc arrière déformable sont réalisées en un matériau relativement flexible.

14. Une pale d'éolienne selon l'une quelconque des revendications 1-13, dans laquelle la totalité ou au moins des parties de la peau (11) de la section de flanc arrière déformable comprennent des éléments actifs.

15. Éolienne comprenant une ou plusieurs pales selon l'une quelconque des revendications précédentes.
